# EUROPEAN PATENT APPLICATION

(11) **EP 1 647 981 A1**
(43) Date of publication of application: **19.04.2006**
(21) Application number: 04292460.5
(22) Date of filing: 15.10.2004
(51) Int. Cl.: G11B 17/028

(54) **Mount for a recording medium**

(71) Applicant: Thomson Licensing, 92100 Boulogne-Billancourt (FR)
(72) Inventor: Boucher, Rodrigue, 21800 Quetigny (FR); Le Guen, Pierre-Yves, 13740 Le rove (FR); Demesquita, Cedric, 21110 Genlis (FR); Le Mee, Julien, 21240 Talant (FR); Besnard, Dominique, 21121 Fontaine Les Dijon (FR); Tabor, Günter, 78056 Villingen-Schwenningen (FR)
(74) Representative: Thies, Stephan

(57) **Abstract**

The present invention relates to a mount (1) for a recording medium (11) capable of reliably securing different types of recording media (11), and to an apparatus for reading from and/or writing to recording media (11) including such mount (1).

According to the invention, a mount for a recording medium, the mount being made of a single piece of plastic material, includes:
- a circular turntable portion (7) to receive a recording medium (11) with a center hole,
- a cylindrical clamping portion (6) coaxial to the turntable portion (7) and having at least three peripheral flexible arms (3) with end protuberances for clamping the recording medium (11) to the turntable portion (7) when the recording medium (11) is mounted on said mount (1), and
- an elastic element (12) for forcing the flexible arms (3) into their clamping position.

## Description

The present invention relates to a mount for a recording medium, and to an apparatus for reading from and/or writing to recording media including such mount.

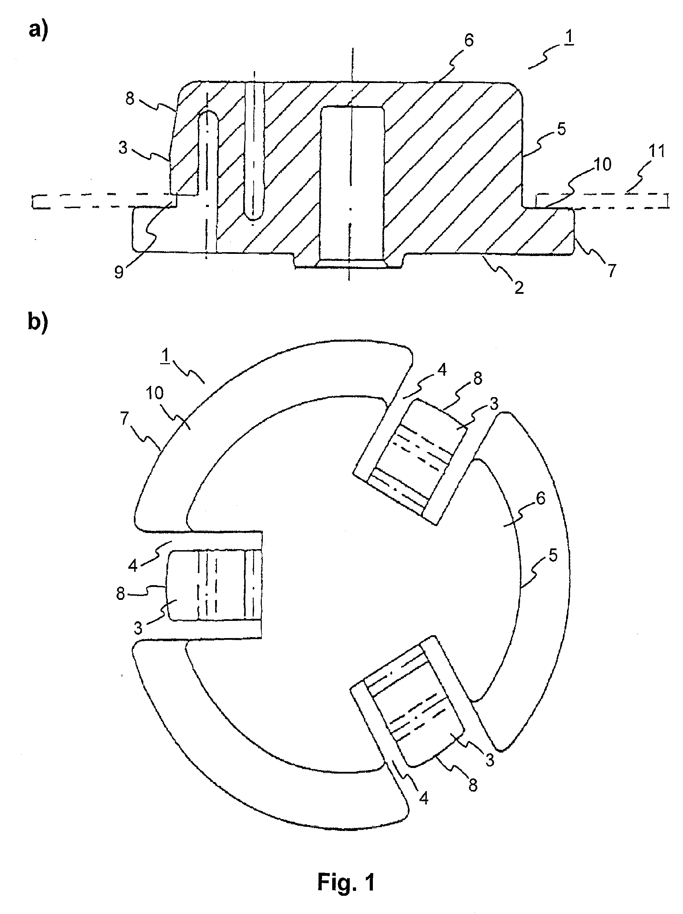

Turntables for recording media with a hub penetrating through a center hole of the recording medium having means for securing the recording medium on the turntable are known. For example, in DE-GM 7005274 a mount for records is proposed, which holds a record both radially outwardly and downwardly on a turntable portion. The mount 1, which is depicted in Figs. 1a) and b), comprises a plastic injection-molded body 2. Tongue-shaped springs 3 injection-molded onto the body 2 are provided in radial slots 4 at the periphery 5 of the hub 6 with an angular spacing of 120 degrees. The tongue-shaped springs 3 project freely downwards in the direction of the turntable portion 7 and are slightly beveled on their upper rear part 8. The distance 9 between the tongue-shaped springs 3 and the bearing surface 10 of the turntable portion 7 for the recording medium 11 corresponds approximately to the thickness of the recording medium 11. When placing a recording medium on the mount 1, the tongue-shaped springs 3 spring back and then settle on the recording medium 11.

A problem arises with the mount according to the prior art due to the fact that a large number of recording media having different quality are available on the market. Some recording media have a center hole with an inner diameter that is larger or smaller than usual, some recording media are thicker or thinner than required, some recording media have chamfered edges while others do not, etc. In some of these cases the recording medium is no longer reliably fixed to the mount. In addition, the tongue-shaped springs might age prematurely due to fatigue of material, which leads to a less tight fixation of a recording medium to the mount.

It is, therefore, an object of the invention to propose an improved mount for recording media capable of reliably securing recording media of different quality.

According to the invention, this object is achieved by a mount for a recording medium, the mount being made of a single piece of plastic material, including:
- a circular turntable portion to receive a recording medium with a center hole,
- a cylindrical clamping portion coaxial to the turntable portion and having at least three peripheral flexible arms with end protuberances for clamping the recording medium to the turntable portion when the recording medium is mounted on said mount, and
- an elastic element for forcing the flexible arms into their clamping position.
When a recording medium, e.g. an optical recording medium such as a CD (Compact Disk) or DVD (Digital Versatile Disk), is moved towards the turntable portion of the mount, the cylindrical clamping portion is inserted into the center hole of the recording medium and the flexible arms are bent into corresponding recesses, thereby deforming the elastic element. The elastic element exerts a reactive force on the flexible arms and presses them against the edge of the center hole of the recording medium. When the recording medium finally is in contact with the turntable portion of the mount, the protrusions of the flexible arms are pressed against the upper part of the edge of the center hole and the recording medium is securely fixed. According to one aspect of the invention a separate elastic element, e.g. a spring (coil spring, leaf spring, etc. ) or a block of compressible material (rubber etc.) is provided for each flexible arm. Favorably, however, a single torus-shaped elastic element such as a rubber ring, a one-turn spring, a metal ring or a circlip, is provided for all flexible arms. This has the advantage that during manufacturing only two parts have to be assembled. The elastic element is advantageously secured within the mount by dedicated fixing means, e.g. a plurality of projections injection molded to the cylindrical clamping portion. Though preferably three flexible arms are provided, which constitutes a trade-off between complexity of the mount and reliability of fixation, it is likewise possible to provide different numbers of flexible arms.

Favorably, a mount according to the invention is used in an apparatus for reading from and/or writing to recording media.

Though the invention has been explained for optical recording media, it is to be noted that the invention is likewise applicable to other types of removable recording media having a center hole for fixing the recording medium in a playback or recording device.

For a better understanding the invention shall now be explained in more detail in the following description with reference to the figures. It is understood that the invention is not limited to this exemplary embodiment and that specified features can also expediently be combined and/or modified without departing from the scope of the present invention. In the figures:
- Fig. 1: shows a cross sectional view and a top view of a mount for a recording medium according to the prior art,
- Fig. 2: depicts a top view of a mount for a recording medium according to the invention,
- Fig. 3: shows a bottom view of a first embodiment of the mount according to the invention,
- Fig. 4: shows a bottom view of a second embodiment of the mount according to the invention, and
- Fig. 5: schematically illustrates the principle of operation of the mount according to the invention.

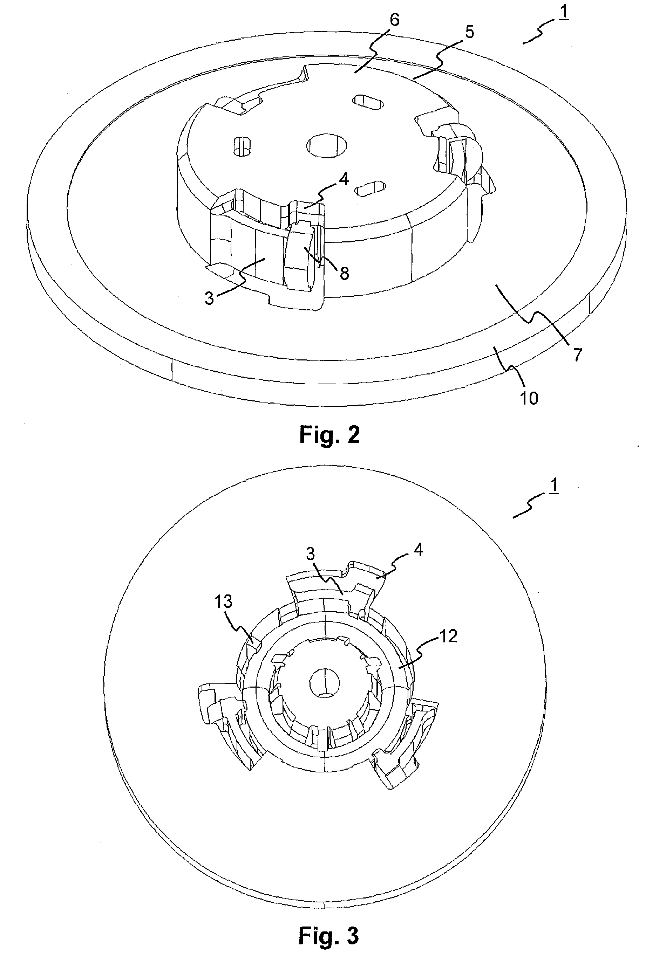

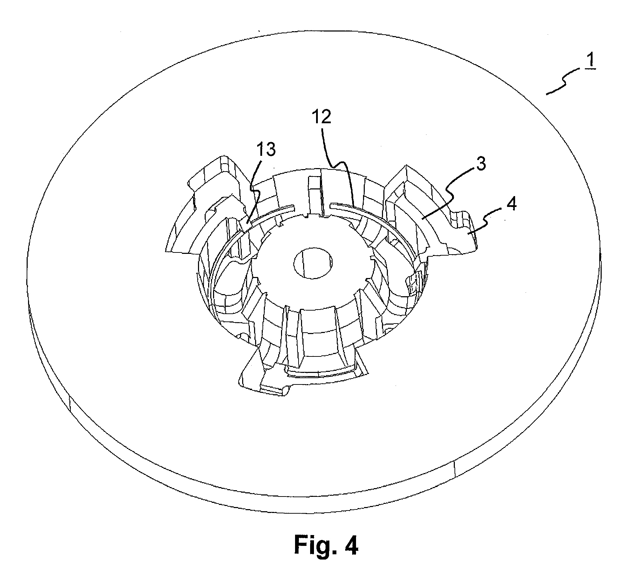

In Fig. 2 a top view of a mount 1 for a recording medium 11 according to the invention is shown. The mount 1, which is made of a single piece of plastic material, e.g. by injection molding, includes a cylindrical clamping portion 6 for engaging with the center hole of a recording medium 11 and a turntable portion 7 having a bearing surface 10 for supporting the recording medium 11. At the periphery 5 of the cylindrical clamping portion 6 three flexible arms 3 with end protuberances are provided. The protrusions extend over the periphery 5 of the cylindrical clamping portion 6 such that the flexible arms 3 are bent into corresponding recesses 4 of the cylindrical clamping portion 6 when a recording medium 11 is pressed onto the mount 1. To allow an easy mounting of the recording medium 11 the upper part 8 of each protrusion is beveled in such a way that it does not extend over the periphery 5 of the cylindrical clamping portion 6. For forcing the flexible arms into their clamping position an elastic element 12 is provided inside the cylindrical clamping portion 6. This elastic element 12 is described in more detail with reference to Figs. 3 and 4.

Fig. 3 shows a bottom view of a first embodiment of the mount 1 according to the invention. Inside the cylindrical clamping portion 6 an elastic ring 12, e.g. a rubber ring (O-ring), is provided. The elastic ring 12 is kept in place by a number of projections 13. When a recording medium 11 is pressed onto the mount 1, the flexible arms 3 are bent inwards into the recesses 4 and against the elastic ring 12, which is compressed and exerts a reactive force on the flexible arms 3, thereby pressing them against the edge of the center hole of the recording medium 11.

In Fig. 4 a bottom view of a further embodiment of the mount 1 according to the invention is shown. In this embodiment the elastic element 12 is made of metal, e.g. in the form of a one-turn spring, a metal ring or a circlip. While in accordance with the first embodiment of the invention the reactive force is mainly caused by the local compression of the material of the elastic element 12, in this embodiment the reactive force mainly stems from the deformation, i.e. the change of shape of the elastic element 12.

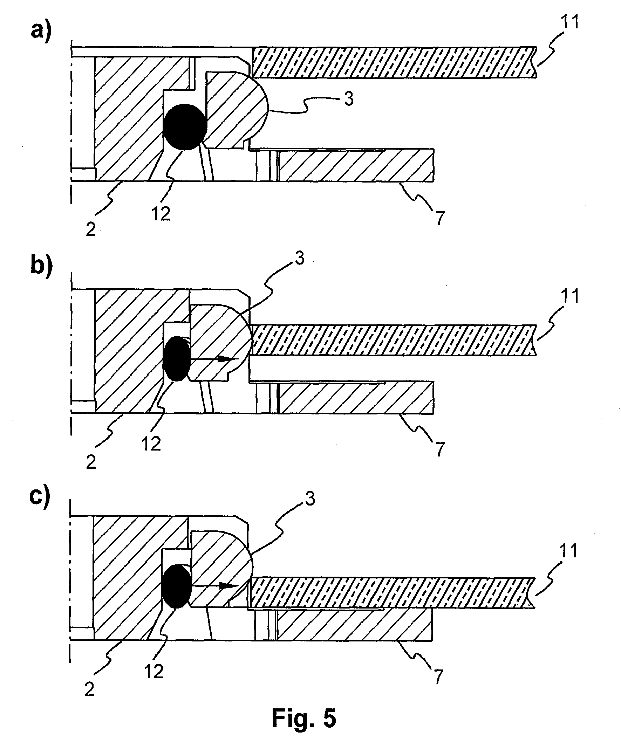

The principle of operation of the mount 1 according to the first embodiment of the invention is schematically illustrated in Fig. 5 a) to c). When a recording medium 11 is pressed onto the mount 1, the edge of the center hole of the recording medium 11 first comes into contact with the beveled upper portions of the protrusions of the flexible arms 3. These are then bent inwards into the corresponding recesses 4 of the cylindrical clamping portion 6 and pressed against the elastic element 12. Since the elastic element 12 is in contact with the body 2 of the mount 1, the material of the elastic element 12 is compressed locally and exerts a reactive force on the flexible arms 3. Therefore, when the recording medium 11 finally comes into contact with the turntable portion 7 of the mount 1, the protrusions of the flexible arms 3 are pressed against the upper edge of the center hole of the recording medium 11. The recording medium 11 is thus securely fixed on the mount 1.

## Claims

1. A mount for a recording medium, the mount being made of a single piece of plastic material, including:
- a circular turntable portion (7) to receive a recording medium (11) with a center hole, and
- a cylindrical clamping portion (6) coaxial to the turntable portion (7) and having at least three peripheral flexible arms (3) with end protuberances for clamping the recording medium (11) to the turntable portion (7) when the recording medium (11) is mounted on said mount (1),
**characterized in that** it further includes an elastic element (12) for forcing the flexible arms (3) into their clamping position.

2. Mount according to claim 1, **characterized in that** the elastic element (12) is an essentially torus-shaped spring element.

3. Mount according to claim 2, **characterized in that** the essentially torus-shaped spring element is a rubber ring.

4. Mount according to claim 2, **characterized in that** the essentially torus-shaped spring element is a circlip or snap ring.

5. Mount according to claim 2, **characterized in that** the essentially torus-shaped spring element is a one-turn metallic spring.

6. Mount according to claim 2, **characterized in that** the essentially torus-shaped spring element is a metal ring.

7. Mount according to one of claims 1 to 6, further including means (13) for securing the elastic element (12).

8. Apparatus for reading from and/or writing to disk-shaped recording media having a center hole, **characterized in that** in includes a mount (1) according to one of claims 1 to 7 for the recording medium (11).
